# EUROPEAN PATENT APPLICATION

(11) **EP 2 123 879 A1**
(43) Date of publication of application: **25.11.2009**
(21) Application number: 08156431.2
(22) Date of filing: 19.05.2008
(51) Int. Cl.: F01N 3/28

(54) **Deflector for mixing and homogenisize exhaust flow in front of an exhaust gas converter**

(71) Applicant: Delphi Technologies, Inc., Troy, Michigan 48007 (US)
(72) Inventor: Preuhs, Jean-Francois, 5100 Jambes (BE); Ravindra, Venkata, 560 Bangalore (IN)
(74) Representative: Office Freylinger

(57) **Abstract**

A manufacturing process to add a deflector (10,22) in a motor vehicle exhausts line comprising a collector, an inlet pipe (2), an exhaust converter (4) and an outlet pipe (6) connected in series; the inlet pipe further comprising a wall; the deflector (10,22), located upstream the exhaust converter (4) and "*more or less*" transversal to the gas flow, creates turbulence's in the gas flow, "*improving*" the homogenization of the exhaust gases prior to enter in the exhaust converter (4); the deflector (10,22) comprising an elongated member (12); the manufacturing process is characterized in that it comprises the following steps:
- piercing the inlet pipe (2) with one hole of similar dimension to the member's cross section;
- inserting the member (12) from the outside of the inlet pipe, through the hole;
- fixing the member to the inlet pipe.

## Description

### TECHNICAL FIELD

The present invention is in the domain of motor vehicle exhaust systems.

### BACKGROUND OF THE INVENTION

A motor vehicle exhaust line generally comprises a collector, an inlet pipe, an exhaust gas converter and an outlet pipe connected in series so that the exhaust gas coming out of an internal combustion engine of a vehicle flows through these elements prior to being released outside. To improve the efficiency of the exhaust gas converter a deflector can be installed in the inlet pipe upstream the exhaust gas converter and substantially transversal to the gas flow. The deflector creates turbulences in the gas flow. The turbulences improve the homogenization of the exhaust gas prior to entering in the exhaust gas converter. The homogenization of the gas flow improves the efficiency of the exhaust gas converter and reduces the atmospheric pollution. The deflector has become an important feature of the exhaust system and numerous vehicles are equipped with a deflector.

Generally the deflector is made of a tubular portion including deflection means and interconnected between two portions of the inlet pipe. The deflection means can take multiple shapes such as a perforated disc, a four leg cross, a multibranch star...

Such a deflector is complex, difficult to assemble and therefore costly.
The present invention proposes a simple process of manufacturing an exhaust line equipped with a deflector. Additionally, the process can be executed to install a deflector in an exhaust line which has not been designed originally for receiving a deflector.

### SUMMARY OF THE INVENTION

The object of the present invention is a manufacturing process to install a deflector in a motor vehicle exhaust line, the exhaust line comprising a collector an inlet pipe an exhaust converter and an outlet pipe, all connected in series so that the exhaust gas flows through these elements prior of being released outside. The inlet pipe further comprises a wall and the manufacturing process object of this invention consists in piercing the wall, sliding an elongated member through the hole and fixing the elongated member to the inlet pipe so that the elongated member constitutes a deflector for generating turbulences in the gas flow upstream with regards to the exhaust gas converter.

The deflector can be installed before or after connection of the inlet pipe to the exhaust gas converter.

The generic process here described can be easily adapted to several variants depending on the homogenization efficiency required for the gas flow:
Should the efficiency not be optimum with one elongated member, additional members, angularly or/and axially shifted relatively to the first member, can be added following a similar process.

The deflector can be located in the near vicinity of the entry of converter. It can as well be located at a further upstream distance from the entry of the converter.

### BRIEF DESCRIPTION OF THE DRAWINGS

Other advantages of the present invention will be readily appreciated by reference to the following detailed description when considered in connection with the accompanying drawings wherein:
Figure 1 is a schematic view of an exhaust line comprising a deflector manufactured according to the method of the invention;
Figure 2 is a detailed view showing an inlet pipe portion wherein the deflector is located;
Figure 3 is a transversal cross-section view showing the deflector after assembly in the inlet pipe;
Figure 4 illustrates a step of the process of installation of the elongated member in the inlet pipe;
Figure 5 is a detailed view showing an inlet pipe portion wherein the deflector comprising two orthogonal members is located.

### DESCRIPTION OF THE PREFERRED EMBODIMENT

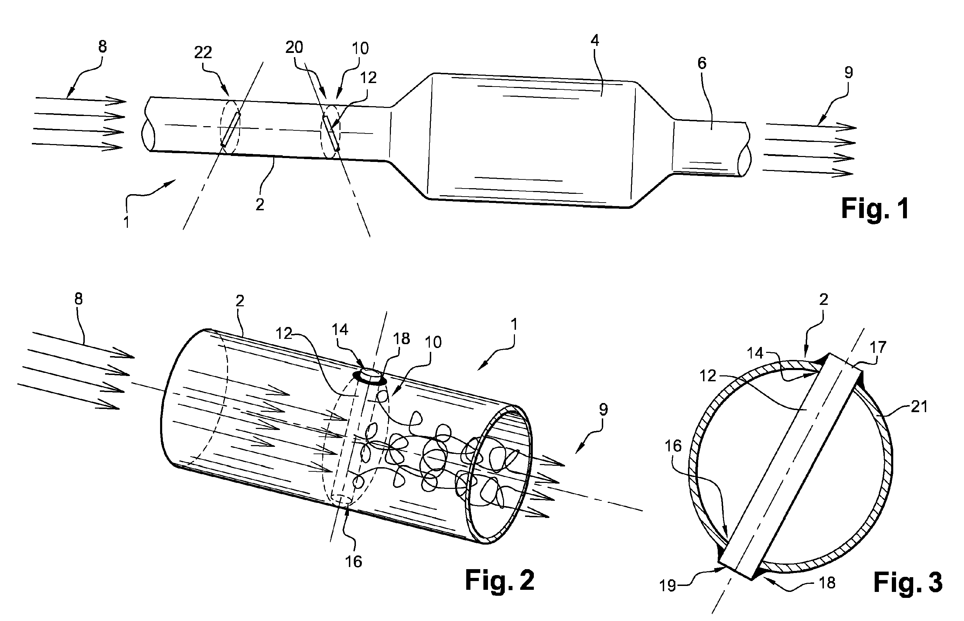

Figure 1 is a schematic view of an exhaust line 1 illustrating the overall construction according to a first embodiment of the present invention. The exhaust line 1 comprises an inlet pipe 2, a gas converter 4, such as a catalytic converter, and an outlet pipe 6. The inlet pipe 2 is connected to the converter 4 so that the exhaust gas 8 flows through the inlet pipe 2 and enter into the converter 4. On its exit side the converter 4 is connected to the outlet pipe 6. The exhaust gas flow 8 travels through the inlet pipe 2 then through the converter 4 and is finally released outside as flow 9. A deflector 10 is installed in the inlet pipe 2 upstream the converter 4. The deflector 10 comprises an elongated member 12 positioned in the inlet pipe 2, transversally to the gas flow 8.

In a first embodiment of the present invention the inlet pipe 2 comprises more than one deflector, one in the near vicinity 20 of the exhaust gas converter 4 and an other one at a more distant location 22.

The man of the art will understand that the deflectors illustrated in Figure 1 can have their axis shifted at any desired angle.

Figure 2 and Figure 3 are detailed views of the area of the inlet pipe 2 where the deflector 10 is, independently of the location 20 or 22 in the inlet pipe 2. The inlet pipe 2 is provided with two opposite holes 14, 16 through which the elongated member 12 is inserted.

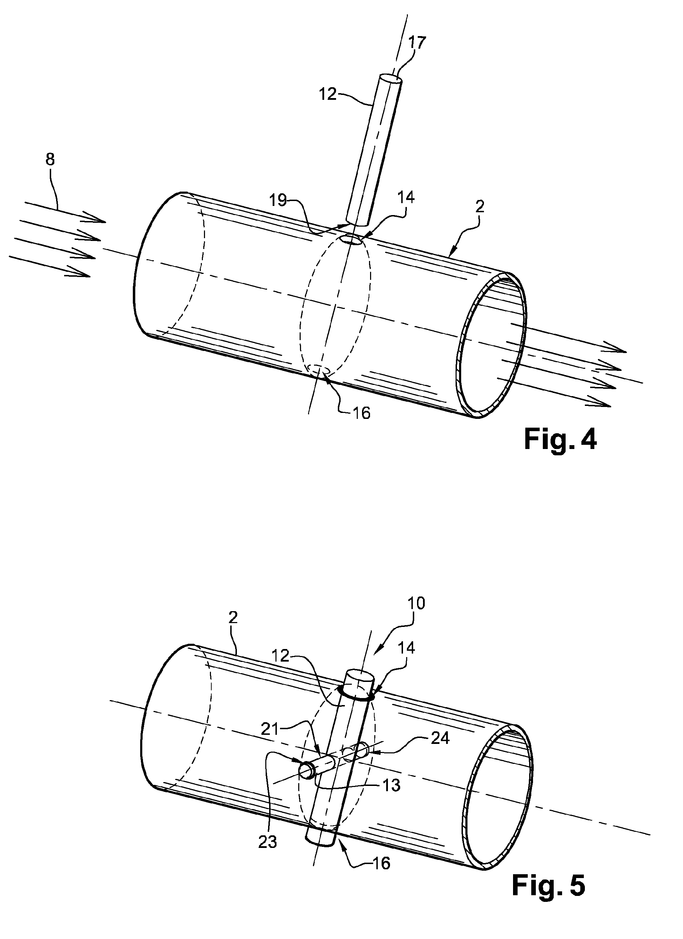

According to a second embodiment shown on Figure 5 the deflector 10 is constituted of two elongated members located in the same transversal plan in the inlet pipe 2. The inlet pipe 2 is provided with two pairs of opposite through holes, 14 and 16, and, 23 and 24. The axes between holes 14 and 16 and between holes 23 and 24 are angularly shifted substantially by 90°. A first elongated member 12 is provided with an intermediate transversal opening 21. The elongated member 12 is inserted through the holes 14 and 16. A second member 13 is inserted through holes 23 and 24 and extends through said opening 21.

Alternative embodiments and complementary information can easily be understood without pictures. For example, the elongated member 12 can be fixed by one extremity only. The inlet pipe 2 is then provided with one hole 14 through which the elongated member 12 is slided. Therefore the elongated member 12 extends only through said hole by one extremity 17 which is fixed (e.g. welded) to the wall 21 of the inlet pipe 2.

Here the elongated member is a cylinder with circular section. It could also be made of a rod with rectangular section or it could have other type of cross-section.

The process, by which the deflector 10 is being installed in the inlet pipe 2, will now be described.

Advantageously, following the process here after described, the deflector 10 can be installed in the inlet pipe 2 before or after connecting the inlet pipe 2 to the exhaust gas converter 4.

The process by which the deflector 10 is being installed in the inlet pipe 2, according to the first embodiment of the present invention will now be described.

Advantageously, the elongated member 12 has a greater length than the cross-section of the inlet pipe 2 to make the attachment to the outside surface of the cylindrical wall 21 easier. The elongated member 12 is inserted through the holes 14 and 16, as illustrated by Figure 4, so that each transversal end 17, 19 extend outside the wall 21 of the inlet pipe 2. The elongated member 12 is attached to the cylindrical wall 21 of the inlet pipe 2, for example by welding.

The process by which the deflector 10 is being installed in the inlet pipe 2, according to the second embodiment of the present invention will now be described.

The elongated members 12 and 13 have greater lengths then the cross-section of the inlet pipe 2 to make the attachment to the outside surface of the cylindrical wall 21 easier. Similarly to the process described for the first embodiment, the elongated member 12 is inserted through the holes 14 and 16 so that each transversal end 17, 19 extend outside the wall 21 of the inlet pipe 2. Then the elongated member 12 is oriented so that the transversal opening 21 is made substantially coaxial with the axis line joining holes 23 and 24. The elongated member 13 is inserted through holes 23 and 24, passing through the opening 21 of the elongated member 12. The elongated members 12 and 13 are attached to the cylindrical wall 21 of the inlet pipe 2, for example by welding.

The man of the art will chose the most appropriate fixing method for the elongated member 12 to the inlet pipe 2. Welding, brazing, gluing, screwing... are compatible with the present invention.

Advantageously, the process described enables to install the deflector 10 without requirement of additional specific volume in the exhaust line 1.

## Claims

1. A manufacturing process for providing an exhaust line (1) of an internal combustion engine with a deflector (10), said exhaust line (1) comprising an inlet pipe (2), an exhaust gas converter (4), and an outlet pipe (6) connected in series so that exhaust gas (8) coming out of the internal combustion engine flow through the exhaust line (1) prior to being released outside, said manufacturing process being **characterized in that** it comprises the following steps:
- piercing at least a first hole in the inlet pipe,
- inserting at least a first elongated member through said first hole into the inlet pipe,
- fixing said first elongated member to the inlet pipe, so that said first elongated member constitutes a deflector (10) for generating turbulences (9) in the gas flow upstream with regards to the exhaust gas converter (4).

2. The manufacturing process as set forth in claim 1, **characterized in that** it further comprises the steps of:
- piercing at least a second hole in the inlet pipe, said second hole being shifted along the inlet pipe direction with regards to said first hole,
- inserting at least a second elongated member through said second hole into the inlet pipe,
- fixing said second elongated member to the inlet pipe.

3. The manufacturing process as set forth in claim 2, **characterized in that** said second hole is angularly shifted along the inlet pipe axis with regards to said first hole so that the two elongated members extend in non-parallel directions.

4. The manufacturing process as set forth in claim 3, **characterized in that** said second hole is located in the same transversal plane as said first hole so that the two elongated members cross over inside the inlet pipe.

5. The manufacturing process as set forth in anyone of claims 1 to 4, **characterized in that** it further comprises the steps of:
- piercing at least one opposite hole in the inlet pipe, said opposite hole being located diametrically opposite to said first or second hole with regards to the inlet pipe axis,
- inserting the corresponding elongated member both through said first or second hole and through said opposite hole.

6. The manufacturing process as set forth in anyone of claims 1 to 5, **characterized in that** said fixing step comprises a brazing step.

7. The manufacturing process as set forth in anyone of claims 1 to 6, **characterized in that** the elongated member is made of a rod.

8. The manufacturing process as set forth in anyone of the claims 1 to 7, **characterized in that** the deflector is installed in the inlet pipe after the connection of the inlet pipe to the exhaust gas converter.
